# FASCICULE DE BREVET EUROPEEN

(11) **EP 0 477 047 B1**
(45) Date de publication et mention de la délivrance du brevet: **18.05.1994**
(21) Numéro de dépôt: 91402265.2
(22) Date de dépôt: 19.08.1991
(51) Int. Cl.: B60H 1/00

(54) **Dispositif de réglage de la température d'un système de climatisation, par exemple pour un véhicule automobile**
Temperaturregelungsvorrichtung einer Klimaanlage, z.B. für ein Kraftfahrzeug
Temperature control device for an air conditioning system, for example for a motor vehicle

(30) Priorité: 19.09.1990 FR 9011569
(43) Date de publication de la demande: 25.03.1992
(73) Titulaire: AUTOMOBILES PEUGEOT, 75116 Paris (FR); AUTOMOBILES CITROEN, 92200 Neuilly-sur-Seine (FR)
(72) Inventeur: Gerard, Alex, F-91430 Igny (FR)
(74) Mandataire: Durand, Yves Armand Louis

(56) Documents cités:
- US-A- 3 916 988
- US-A- 4 354 547
- PATENT ABSTRACTS OF JAPAN vol. 06, no. 10 (M-107)(888) 21 Janvier 1982& JP-A-56 131 414 (KIKI ) 15 Octobre 1981

## Description

La présente invention se rapporte généralement à un système de climatisation, par exemple pour un véhicule automobile, et concerne plus particulièrement un dispositif de réglage de la température d'un tel système.

On connaît depuis longtemps des systèmes de climatisation de l'habitacle d'un véhicule, qui comprennent un conduit débouchant d'une part dans l'habitacle et raccordé d'autre part à une prise d'air qui débouche à l'extérieur du véhicule. Dans les systèmes de climatisation connus, un échangeur de chaleur et un moyen de réfrigération sont disposés dans le conduit pour respectivement réchauffer et refroidir un flux d'air provenant de la prise d'air et forcé vers l'habitacle, par exemple à l'aide d'un ventilateur qui est prévu dans le conduit, en amont de l'échangeur et du moyen de réfrigération, suivant le sens de l'écoulement du flux d'air.

Usuellement, un volet de réglage de la température du flux d'air est monté mobile dans le conduit, entre le ventilateur et l'échangeur de chaleur, de façon à dévier une partie variable du flux d'air vers l'échangeur.

Le réglage de la température du flux d'air dirigé vers l'habitacle est effectué, dans les systèmes de climatisation de l'art antérieur, à l'aide d'un organe de réglage de la position du volet, et d'un organe de commande de mise en marche du moyen de réfrigération, qui peuvent être actionnés séparemment.

Aussi, lorsque l'air extérieur est chaud, il peut être nécessaire, pour obtenir une température plus fraîche dans l'habitacle, de mettre en marche le moyen de réfrigération alors que l'organe de réglage est dans une position dans laquelle le volet obture complètement le passage du flux d'air vers l'échangeur.

Cependant, la majorité des moyens de réfrigération disponibles sur le marché ne sont pas réglables - c'est-à-dire fonctionnent en tout ou rien - de sorte que l'air introduit dans l'habitacle peut être trop froid, et qu'il est alors nécessaire, pour obtenir une température agréable, d'ouvrir à nouveau le passage d'air vers l'échangeur pour réchauffer une partie du fluide dirigé vers l'habitacle.

Une telle opération de réglage de la température est compliquée et fastidieuse, et est en conséquence désagréable pour l'utilisateur.

L'invention a pour but de résoudre ce problème en proposant un dispositif de réglage d'un système de climatisation qui permette un ajustement rapide et aisé de la température dans l'habitacle du véhicule, et qui évite de recourir à une commande variable du moyen de réfrigération qui est coûteuse et de conception complexe.

A cet effet, l'invention a pour objet un dispositif de réglage d'un système de climatisation, par exemple pour un véhicule automobile, le système étant du type comportant :
- un conduit débouchant d'une part dans l'habitacle et raccordé d'autre part à une prise d'air, de manière à diriger un flux d'air vers l'habitacle du véhicule ;
- un échangeur de chaleur et un moyen de réfrigération, disposés dans le conduit, entre un ventilateur et l'habitacle, et aptes à respectivement réchauffer et refroidir au moins une partie du flux d'air qui est forcé vers l'habitacle à l'aide du ventilateur ; et
- un volet de réglage monté mobile dans le conduit entre le ventilateur et l'échangeur et déplacé à l'aide d'un organe de réglage, de façon à dévier vers l'échangeur de chaleur une partie variable du flux d'air, ledit dispositif étant caractérisé en ce qu'une commande de mise en marche du moyen de réfrigération est raccordée à l'organe de réglage de la position du volet, de sorte qu'un déplacement dans un sens donné de cet organe de réglage entraîne une variation progressive et continuellement croissante ou décroissante de la température de l'air pénétrant dans l'habitacle.

Le dispositif est encore caractérisé en ce que la course de l'organe de réglage dans le sens allant de la température maximale à la température minimale de l'air comprend successivement trois zones telles que : dans la première zone, le volet de réglage est progressivement déplacé depuis une position dite "chaude" dans laquelle l'ensemble du flux d'air est dévié au travers de l'échangeur de chaleur, vers une position dite "froide" dans laquelle le volet obture complètement le passage de l'air vers l'échangeur ; dans la deuxième zone, l'organe de réglage déclenche la mise en marche du moyen de réfrigération, puis déplace progressivement le volet vers une position dite "intermédiaire" dans laquelle le passage de l'air vers l'échangeur est partiellement ouvert ; et dans la troisième zone, le volet est à nouveau déplacé progressivement vers sa position froide, alors que le moyen de réfrigération est maintenu en marche.

Suivant un mode de réalisation de l'invention, le dispositif est caractérisé en ce que l'organe de réglage est une manette à déplacement linéaire.

Suivant un mode de réalisation préféré de l'invention, le dispositif est caractérisé en ce que l'organe de réglage est un bouton rotatif.

On précisera encore ici que le dispositif se caractérise en ce qu'il comprend de plus : un pignon pivotant et entraîné en rotation par l'organe de réglage ; et un élément pivotant et entraîné en rotation par le pignon, ledit élément pivotant déplaçant le volet de réglage suivant un mouvement de pivotement, le pignon et l'élément pivotant présentant des portions dentées et des secteurs dentés respectivement, les portions étant aptes à venir en prise d'engrènement avec les secteurs dentés, et étant agencées de façon qu'une rotation continue dans un sens donné du pignon entraîne l'élément pivotant alternativement dans un sens et dans l'autre.

Le dispositif se caractérise encore en ce que l'élément pivotant comporte deux secteurs dentés qui sont disposés coaxialement à un axe de rotation de l'élément, le premier de ces secteurs étant formé sur une partie intérieure de l'élément pivotant, et le second sur une partie extérieure, de sorte que le pignon pivotant qui est monté entre ces deux secteurs, vient successivement en prise d'engrènement avec l'un et l'autre de ces secteurs, lorqu'il est entraîné en rotation dans un sens donné.

L'invention est encore caractérisée en ce que ledit pignon pivotant présente :
- une première portion dentée qui vient en prise avec un des secteurs dentés de l'élément pivotant lorsque l'organe de réglage est dans ladite première zone de sa course ;
- une deuxième portion dentée qui vient en prise avec l'autre secteur denté lorsque l'organe de réglage est dans la deuxième zone de sa course ; et
- une troisième portion dentée qui vient en prise avec le même secteur que la première portion dentée, lorsque l'organe de réglage est dans la troisième zone de sa course.

Il convient de noter ici que l'invention se caractérise de plus en ce que lesdits premier et second secteurs dentés de l'élément pivotant sont décalés l'un par rapport à l'autre suivant l'axe de rotation de cet élément, au moins l'une des portions dentées du pignon pivotant étant disposée au niveau du premier secteur, et au moins une autre portion dentée étant disposée au niveau du second secteur denté de l'élément pivotant.

Le dispositif est encore caractérisé en ce que le bouton rotatif précité est solidaire du pignon pivotant, pour entraîner directement celui-ci en rotation.

En outre, le dispositif se caractérise en ce que le volet de réglage précité est solidaire dudit élément pivotant, pour être déplacé directement par celui-ci.

Mais d'autres avantages et caractéristiques de l'invention apparaîtront mieux dans la description détaillée qui suit et se réfère aux dessins annexés dans lesquels :
La figure 1 illustre schématiquement un système de climatistion auquel la présente invention peut être adaptée ;
La figure 2 est une vue d'un tableau de commande du dispositif de réglage conforme à l'invention ;
La figure 3 est un diagramme illustrant les différentes zones de la course de l'organe de réglage de la température conforme à l'invention ;
La figure 4 est un diagramme expliquant les déplacements d'un volet de réglage en fonction de la position de l'organe de réglage ;
La figure 5 représente un dispositif conforme à l'invention avec le volet de réglage dans ses différentes positions ;
La figure 6 est une vue en plan d'un pignon et d'un élément pivotant du dispositif conforme à l'invention ; et
La figure 7 est une vue en coupe suivant la ligne VII-VII de la figure 6.

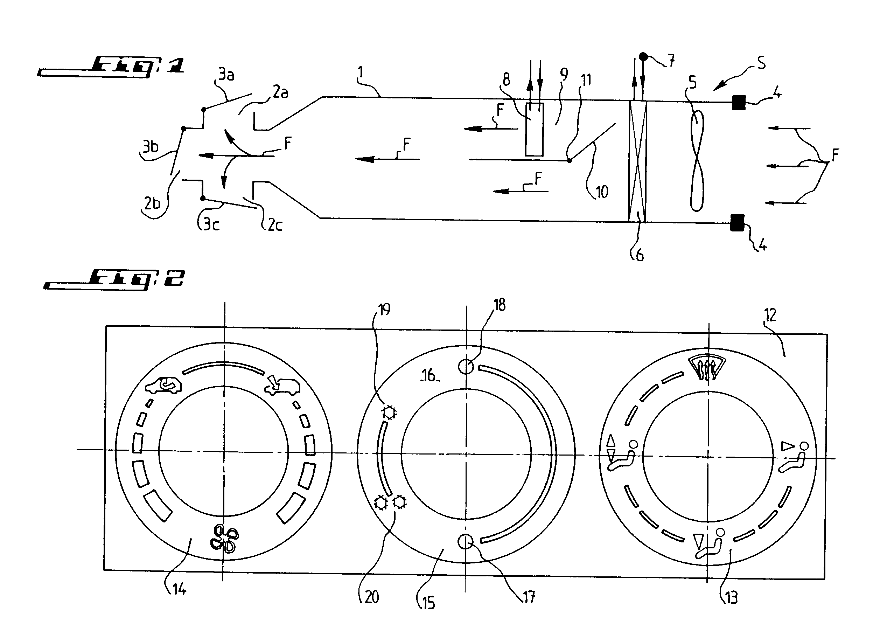

En se reportant tout d'abord à la figure 1, on voit qu'un système de climatisation est désigné par la référence générale S. Ce système S comprend principalement un conduit 1 qui est disposé à l'intérieur de la caisse d'un véhicule (non représentée), et est de préférence disposé à l'avant de ce véhicule. Comme représenté de façon schématique sur la gauche de la figure 1, le conduit 1 débouche d'une part dans l'habitacle du véhicule, par l'intermédiaire de plusieurs ouïes 2a, 2b et 2c, dont le débit peut être ajusté à l'aide de moyens de réglage 3a, 3b et 3c, qui sont représentés ici sous la forme de volets pivotants. D'autre part, le conduit 1 est raccordé à une prise d'air 4, qui débouche à l'extérieur du véhicule. On comprend déjà que le conduit 1 permet de diriger vers l'habitacle du véhicule un flux d'air représenté par les flèches F sur les figures et capté à l'extérieur du véhicule par l'intermédiaire de la prise d'air 4.

On a représenté à l'intérieur du conduit 1 et à proximité de la prise d'air 4, un ventilateur 5, par exemple du type à pales et entraîné par un moteur (non représenté), qui permet de forcer l'air capté à l'extérieur du véhicule par l'intermédiaire de la prise 4 vers l'habitacle du véhicule. On a également prévu dans le conduit 1, entre le ventilateur 5 et les ouïes 2a, 2b et 2c un moyen de réfrigération 6. Ce moyen de réfrigération 6 peut par exemple être un échangeur air-fréon, qui fonctionne comme un évaporateur lorsqu'un organe de commande 7 est actionné pour mettre en marche le compresseur. Suivant l'exemple illustré, le moyen de réfrigération 6 ne peut être placé que dans deux états de fonctionnement, à savoir un état de marche et un état d'arrêt. Autrement dit, le moyen de réfrigération 6 fonctionne en tout ou rien, de manière que l'air qui est dirigé au travers de celui-ci est soit refroidi lorsque le compresseur est en marche, soit gardé à sa température d'entrée lorsque l'organe de commande 7 a placé le moyen de réfrigération 6 dans son état d'arrêt.

La référence numérique 8 désigne un échangeur de chaleur conventionnel d'un type quelconque, et qui permet de réchauffer l'air qui le traverse. Suivant l'exemple illustré, cet échangeur de chaleur 8 est constitué par un passage d'air 9 qui forme une partie séparée du conduit 1, et à l'intérieur duquel font saillie des canalisations raccordées au système de refroidissement du moteur du véhicule. On comprend donc qu'une partie du flux d'air F qui passe dans le passage d'air 9 se charge de calories auprès des canalisations de l'échangeur de chaleur 8.

Un volet de réglage 10 qui est monté mobile à l'intérieur du conduit par l'intermédiaire d'une articulation pivotante 11, est situé entre le moyen de réfrigération 6 et l'échangeur de chaleur 8. Ce volet de réglage est donc monté à rotation dans le conduit 1 de façon à pouvoir dévier vers le passage d'air 9 dans lequel est disposé l'échangeur de chaleur 8, une partie variable du flux d'air F en fonction de sa position .

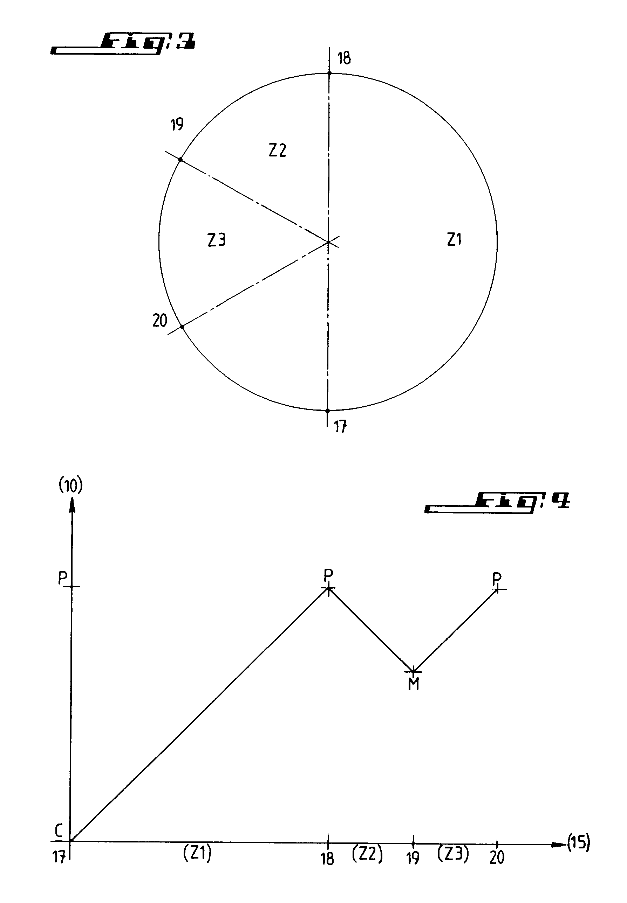

En se reportant maintenant à la figure 2, on voit un tableau de commande 12 de la climatisation. Ce tableau de commande 12 comporte trois organes permettant le réglage du système de climatisation. En commençant par la droite sur la figure 2, un premier organe de réglage 13 permet de commander l'ouverture et la fermeture des volets 3a, 3b, 3c, afin de faire varier l'orientation du flux d'air pénétrant dans l'habitacle.

A l'autre extrémité du tableau de commande 12, se trouve un autre organe de réglage 14 qui permet de faire varier l'intensité du flux d'air forcé dans l'habitacle par le ventilateur 5.

Un organe de réglage 15 conforme à la présente invention et ayant la forme d'un bouton rotatif est disposé au centre du tableau de commande 12. Cet organe de réglage 15 permet le réglage de la température du flux d'air F qui est forcé dans l'habitacle. Il convient de préciser ici que tout autre type d'organe de réglage approprié peut être utilisé à la place du bouton rotatif 15, tel que par exemple une manette à déplacement linéaire.

L'organe de réglage ou bouton rotatif 15 est entouré par un cadran indicateur 16, qui permet d'indiquer à l'utilisateur du système de climatisation les différents réglages de température possibles de celle-ci. Suivant l'exemple illustré, un point de référence 17 indique une position de l'organe de réglage pour laquelle le flux d'air F est le plus chaud. Cette position est désignée ci-après par position "chaude". Le point de référence 18 indique une position du bouton de réglage 15 dans laquelle l'air forcé à l'intérieur de l'habitacle est à une température sensiblement égale à celle à laquelle il a été capté à l'extérieur du véhicule. Le point de référence 19 indique quant à lui une position du bouton de réglage rotatif 15 dans laquelle le flux d'air F dirigé vers l'habitacle subit une réfrigération minimale. Enfin, le point de référence 20 indique une position du bouton de réglage rotatif 15 dans laquelle la réfrigération du flux d'air F forcé vers l'habitacle est maximale.

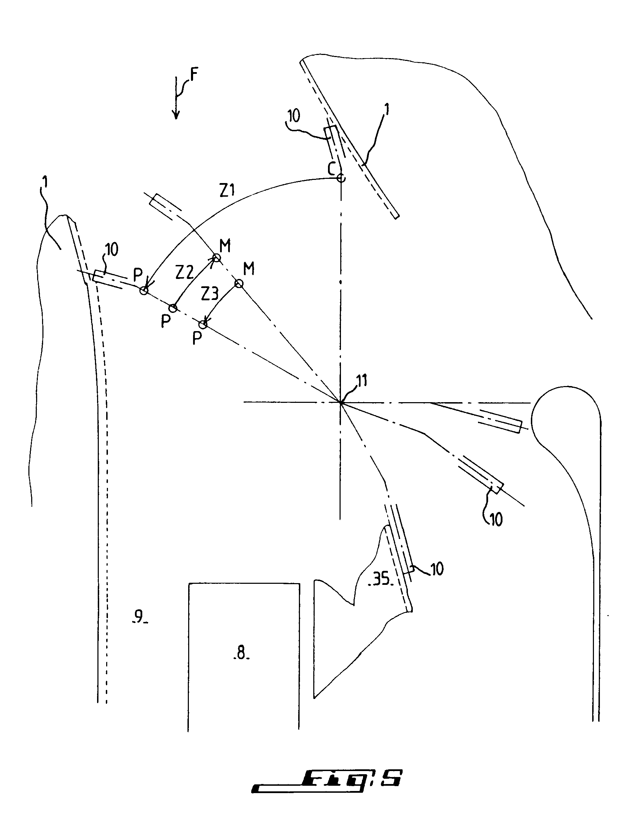

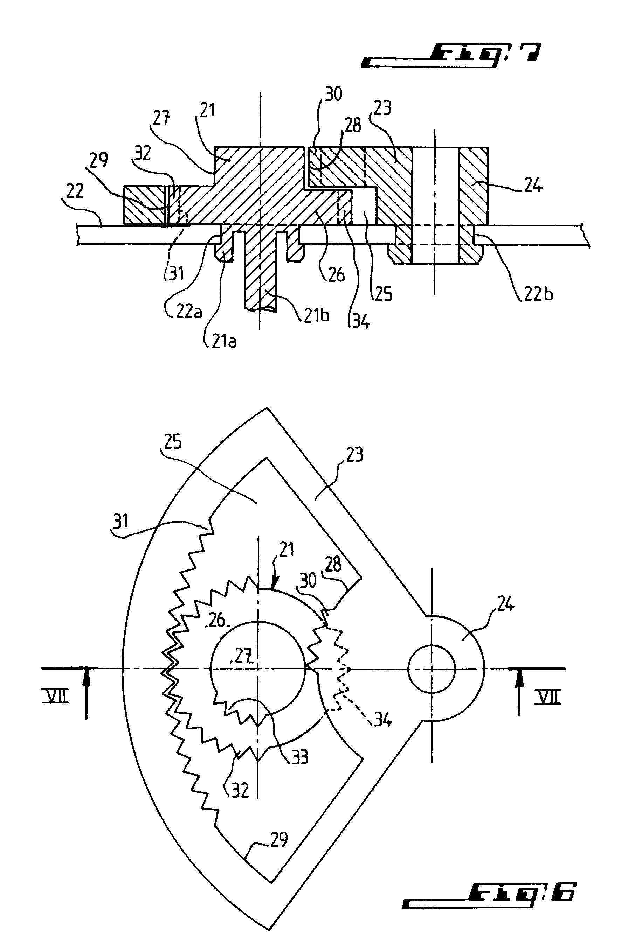

En se reportant maintenant aux figures 5, 6 et 7, le dispositif de réglage du système de climatisation S conforme à l'invention va pouvoir être expliqué.

Sur les figures 6 et 7 tout d'abord, on voit un pignon pivotant 21, qui est monté à rotation sur une platine 22 formant l'arrière du tableau de commande 12. On notera ici que le montage du pignon 21 sur la platine 22 est effectué dans un perçage 22a de ladite platine 22 dans lequel vient se loger une couronne ou col déformable 21a dont une partie périphérique du diamètre extérieur supérieur à celui du perçage 22a permet la fixation par clippage du pignon 21. Bien que ceci ne soit pas représenté, le pignon pivotant 21 est raccordé, par l'intermédiaire d'un axe 21b faisant saillie de la partie 21a, au bouton rotatif 15 qui a été décrit plus haut. Il ressort donc déjà que le bouton rotatif 15 est rendu solidaire du pignon pivotant 21, de manière que ce dernier est entraîné directement en rotation lorsque l'on manie le bouton 15.

On voit également sur les figures 6 et 7 un élément pivotant 23 en forme de secteur de disque. Cet élément 23 est monté à rotation sur la platine 22 par l'intermédiaire d'une partie cylindrique 24, dont l'extrémité libre est logée, par exemple par clippage, dans un passage 22b de la platine. Suivant l'exemple illustré, la partie cylindrique 24 et le secteur de disque 23 ne forment qu'une seule pièce. Une ouverture oblongue et arquée 25 est formée dans le secteur de disque 23. Le pignon 21 fait saillie au travers de cette ouverture 25. On remarquera ici que le pignon 21 comporte deux portions sensiblement cylindriques 26 et 27 qui sont formées de façon coaxiale à l'axe de pivotement 21b du pignon. La première portion cylindrique 26 est disposée contre la platine 22 et présente un diamètre supérieur à celui de la deuxième portion cylindrique 27. Cette portion 27 constitue la partie supérieure du pignon 21, sur la figure 7, et est disposée au regard d'un bord intérieur 28 de l'ouverture 25. La portion cylindrique 26 du pignon 21 est quant à elle disposée au regard du bord extérieur 29 de l'ouverture 25.

On voit bien sur la figure 6 que le pignon 21 et l'élément pivotant 23 présentent des secteurs dentés, aptes à venir en prise d'engrènement les uns avec les autres. Plus précisément, l'élément pivotant 23 comporte deux secteurs dentés 30, 31, qui s'étendent coaxialement à la partie cylindrique 24, c'est-à-dire coaxialement à l'axe de rotation de l'élément pivotant 23. Sur la figure 7, les secteurs dentés 30 et 31 sont décalés l'un par rapport à l'autre suivant l'axe de rotation de l'élément pivotant 23. Le premier secteur denté 30 est formé sur le bord intérieur 28 de l'ouverture 25, et le second secteur 31 de l'élément pivotant 23 est formé sur le bord extérieur 29 de l'ouverture 25.

Le pignon 21 présente quant à lui trois secteurs ou portions dentés, qui sont respectivement désignés par les références numériques 32, 33 et 34. Le premier secteur denté 32 du pignon 21 est formé à la périphérie de la portion 26, de façon à pouvoir venir en prise d'engrènement avec le secteur denté 31 de l'élément 23 lorsque l'organe de réglage 15 est placé dans une première zone de sa course, c'est-à-dire entre la position dite "chaude" au point de référence 17, et la position indiquée par le point 18 du cadran 16. Le second secteur denté 33 du pignon 21 est formé à la périphérie de la portion 27 de petit diamètre. Ce second secteur denté 33 peut ainsi venir en prise d'engrènement avec le secteur denté 30 de l'élément pivotant 23 lorsque l'organe de réglage 15 est placé dans une seconde zone de sa course, qui est comprise entre la position du bouton 15 indiquée par le point de référence 18, et le point de référence 19 du cadran 16. Le troisième secteur denté 34 du pignon 21 est diamétralement opposé au secteur denté 32 de la portion cylindrique 26. Le troisième secteur 34 peut donc également venir en prise d'engrènement avec le secteur denté 31 de l'élément 23. L'entrée en prise des secteurs dentés 34 et 31 a lieu lorsque l'organe de réglage 15 est placé dans une troisième zone de sa course, à savoir entre la position définie par le point de référence 19 et le point de référence 20 du cadran 16, qui correspond à la position dite "froide".

On comprend donc que le pignon pivotant 21 qui est monté en saillie entre les deux secteurs dentés 30 et 31 de l'élément 23, vient alternativement en prise d'engrènement avec l'un et l'autre de ces secteurs lorsqu'il est entraîné en rotation dans un sens donné. Ainsi, en déplaçant l'organe de réglage 15 dans un sens donné, tel que par exemple depuis le point de référence 17 vers le point 20 du cadran 16, le pignon 21 entraîne alternativement l'élément pivotant 23 dans un sens et dans l'autre, en fonction des secteurs dentés qui sont successivement en prise.

Suivant l'exemple illustré, l'élément pivotant 23 est solidaire du volet de réglage 10 de manière à entraîner directement ce dernier. En outre, la commande de mise en marche 7 du moyen de réfrigération 6 est également raccordée à l'ensemble formé par le bouton 15, le pignon 21 et l'élément 23, de sorte que lorsque le bouton de réglage 15 atteint la position intermédiaire définie par le point de référence 19, le moyen de réfrigération 6 est actionné si le bouton 15 est déplacé vers le point de référence 20, et est mis à l'arrêt si l'on déplace le bouton 15 vers le point de référence 17. Le moyen 6 est par conséquent mis en fonctionnement ou à l'arrêt lorsque l'organe de réglage 15 est actionné, sans avoir besoin de recourir à une commande séparée.

En se reportant aux figures 3 à 5 notamment, le fonctionnement du dispositif conforme à l'invention qui vient d'être décrit va maintenant être expliqué plus en détail.

Sur la figure 3, on voit un schéma qui représente la course du bouton rotatif 15. Sur ce schéma, la référence Z1 indique la première zone de la course de l'organe de réglage 15, qui s'étend sensiblement sur un demi-tour, du point 17 au point 18 du cadran 16. On a également désigné par la référence Z1 sur la figure 5 un angle de déplacement du volet de réglage 10, depuis une position "chaude" ou C, dans laquelle le volet 10 dirige l'ensemble du flux F dans le passage d'air 9 où est monté l'échangeur de chaleur 8, vers une position P dans laquelle le volet obture complètement le passage 9. Le déplacement angulaire de la zone Z1 est obtenu grâce à la coopération des secteurs dentés 31 et 32 de l'élément 23 et du pignon pivotant 21 respectivement. Dans cette première zone Z1, la température de l'air forcé vers l'habitacle varie en décroissant depuis un chauffage maximal en position C jusqu'à atteindre la température de l'air ambiant, en position P.

Sur les figures 3 et 5, la référence Z2 désigne la deuxième zone de la course du bouton 15, ainsi que le déplacement angulaire correspondant du volet 10 autour de son axe de pivotement 11. Suivant l'exemple illustré, la zone Z2 de la course du bouton 15 s'étend sensiblement sur 60°, entre les points 18 et 19 de référence, qui correspondent respectivement aux positions P et M du volet 10. Le déplacement du volet 10 suivant la zone Z2 est obtenu grâce à la coopération des secteurs dentés 30 et 33. Dans le sens indiqué par la flèche Z2 sur la figure 5, le volet 10 ouvre à nouveau partiellement le passage d'air 9 alors que le moyen de réfrigération 6 a été mis en fonctionnement dès le dépassement de la position P. Il convient de noter ici que la zone Z2 est de préférence une zone instable, de sorte que le volet 10 ne peut être immobilisé entre la position P et la position intermédiaire M.

La position intermédiaire M correspond à un refroidissement minimum de la température de l'air forcé dans l'habitacle, puisqu'une partie du flux F est orientée vers le passage d'air 9 où elle est réchauffée par l'échangeur 8. On remarquera ici que le déplacement du volet 10 est effectué dans des sens inverses suivant la zone Z1 et suivant la zone Z2.

La troisième zone de la course du bouton de réglage 15 et le déplacement angulaire du volet 10 depuis la position M vers la position froide P, sont tous les deux désignés par Z3 sur les figures 3 et 5. Suivant cette zone Z3, le bouton 15 entraîne le volet 10 en sens inverse de la zone 2, grâce à la coopération des secteurs dentés 31 et 34. Dans la position P de la zone Z3, le volet 10 obture à nouveau complètement le passage d'air 9, comme visible sur la figure 5. Ainsi, l'ensemble du flux F est refroidi par le moyen de réfrigération 6, ce qui procure une réfrigération maximale de l'air forcé dans l'habitacle.

En se reportant maintenant à la figure 4, on voit un diagramme dans lequel la ligne d'abscisse indique la course de l'organe de réglage 15, et l'ordonnée indique les positions angulaires successives du volet 10. On comprend aisément à l'aide de ce diagramme qu'un déplacement dans un sens donné de l'organe de réglage 15 provoque un déplacement alternativement dans un sens puis dans l'autre du volet 10, suivant les zones Z1, Z2 et Z3.

Par conséquent, avec le dispositif de réglage de la température d'un système de climatisation conforme à l'invention, le déplacement dans un sens donné de l'organe de réglage 15 entraîne une variation progressive et continuellement croissante ou décroissante de la température de l'air pénétrant dans l'habitacle. Evidemment, c'est en déplaçant le bouton 15 dans un sens allant du point de référence 17 vers le point de référence 20 du cadran 16, que la température de l'air forcé dans l'habitacle décroît de façon progressive et continuelle.

On a donc obtenu un dispositif de réglage de la température d'une climatisation qui est d'un emploi et d'une structure simples et aisément compréhensibles par un utilisateur.

Evidemment, l'invention n'est nullement limitée au mode de réalisation décrit et illustré.

Ainsi, l'échangeur de chaleur peut être placé en amont ou aval, suivant le sens de l'écoulement du flux d'air dans le conduit 1, du moyen de réfrigération. Le volet de réglage peut également être remplacé par un robinet permettant de faire varier le débit d'eau chaude provenant du moteur, et son déplacement peut être effectué par l'intermédiaire de bielles, de câbles, ou encore pneumatiquement ou électriquement.

L'invention comprend donc tous les équivalents techniques des moyens décrits et leurs combinaisons.

## Revendications

1. Dispositif de réglage d'un système de climatisation, notamment pour un véhicule automobile, le système étant du type comportant :
- un conduit (1) débouchant d'une part dans l'habitacle et raccordé d'autre part à une prise d'air (4), de manière à diriger un flux d'air vers l'habitacle du véhicule ;
- un échangeur de chaleur (8) et un moyen de réfrigération (6) disposés dans le conduit (1), entre un ventilateur (5) et l'habitacle, et aptes à respectivement réchauffer et refroidir au moins une partie du flux d'air qui est forcé vers l'habitacle à l'aide du ventilateur (5) ; et
- un volet de réglage (10) monté mobile dans le conduit (1), entre le ventilateur (5) et l'échangeur (8), et déplacé à l'aide d'un organe de réglage (15), de façon à dévier vers l'échangeur de chaleur (8) une partie variable du flux d'air,
ledit dispositif étant caractérisé en ce qu'une commande de mise en marche (7) du moyen de réfrigération (6) est raccordée à l'organe de réglage (15) de la position du volet (10), de sorte qu'un déplacement dans un sens donné de cet organe de réglage (15) entraîne une variation progressive et continuellement croissante ou décroissante de la température de l'air dirigé vers l'habitacle.

2. Dispositif selon la revendication 1, caractérisé en ce que la course de l'organe de réglage (15) dans le sens allant de la température maximale à la température minimale de l'air, comprend successivement trois zones telles que :
- dans la première zone (Z1), le volet de réglage (10) est progressivement déplacé depuis une position dite "chaude" dans laquelle l'ensemble du flux d'air (F) est dévié au travers de l'échangeur de chaleur (8) vers une position dite "froide" dans laquelle le volet (10) obture complètement le passage (9) de l'air vers l'échangeur (8);
- dans la deuxième zone (Z2), l'organe de réglage (15) déclenche la mise en marche du moyen de réfrigération (6), puis déplace progressivement le volet (10) vers une position dite "intermédiaire" dans laquelle le passage de l'air (9) vers l'échangeur (8) est partiellement ouvert ; et
- dans la troisième zone (Z3), le volet est à nouveau déplacé progressivement vers sa position froide, alors que le moyen de réfrigération (6) est maintenu en marche.

3. Dispositif selon l'une quelconque des revendications 1 et 2, caractérisé en ce que l'organe de réglage (15) est une manette à déplacement linéaire.

4. Dispositif selon l'une quelconque des revendications 1 et 2, caractérisé en ce que l'organe de réglage (15) est un bouton rotatif.

5. Dispositif selon l'une quelconque des revendications 1 à 4, caractérisé en ce qu'il comprend de plus :
- un pignon pivotant (21) entraîné en rotation par l'organe de réglage (15) ; et
- un élément pivotant (23) entraîné en rotation par le pignon (21), ledit élément pivotant déplaçant le volet de réglage (10) suivant un mouvement de pivotement, le pignon et l'élément pivotant présentant des portions dentées (32, 33, 34)et des secteurs dentés (30, 31) respectivement, les portions (32, 33, 34) étant aptes à venir en prise d'engrènement avec les secteurs dentés (30, 31), et étant agencées de façon qu'une rotation continue, dans un sens donné, du pignon (21) entraîne l'élément pivotant (23) alternativement dans un sens et dans l'autre.

6. Dispositif selon la revendication 5, caractérisé en ce que l'élément pivotant (23) comporte deux secteurs dentés (30, 31) qui sont disposés coaxialement à un axe de rotation de l'élément, le premier (30) de ces secteurs étant formé sur une partie intérieure (28) de l'élément pivotant, et le second (31) sur une partie extérieure (29), de sorte que le pignon pivotant (21) qui est monté entre ces deux secteurs vient successivement en prise d'engrènement avec l'un et l'autre de ces secteurs, lorsqu'il est entraîné en rotation dans un sens donné.

7. Dispositif selon les revendications 2 et 6, caractérisé en ce que ledit pignon (21) présente :
- une première portion dentée (32) qui vient en prise avec l'un (31) des secteurs dentés de l'élément pivotant (23) lorsque l'organe de réglage (15) est dans ladite première zone (Z1) de sa course ;
- une deuxième portion dentée (33) qui vient en prise avec l'autre secteur denté (30) lorsque l'organe de réglage (15) est dans la deuxième zone (Z2), de sa course ; et
- une troisième portion dentée (34) qui vient en prise avec le même secteur (31) que la première portion dentée (32), lorsque l'organe de réglage est dans la troisième zone (Z3) de la course.

8. Dispositif selon la revendication 7, caractérisé en ce que lesdits premier (30) et second (31) secteurs dentés de l'élément pivotant (29) sont décalés l'un par rapport à l'autre suivant l'axe de rotation de cet élément, au moins l'une des portions dentées du pignon pivotant (21) étant disposée au niveau du premier secteur (30), et au moins une autre portion dentée étant disposée au niveau du second secteur denté (31) de l'élément pivotant.

9. Dispositif selon la revendication 4, et l'une quelconque des revendications 5 à 8, caractérisé en ce que le bouton rotatif (15) précité est solidaire du pignon pivotant (21), pour entraîner directement celui-ci en rotation.

10. Dispositif selon l'une quelconque des revendications 5 à 9, caractérisé en ce que le volet de réglage (10) précité est solidaire dudit élément pivotant (23), pour être déplacé directement par celui-ci.

## Patentansprüche

1. Vorrichtung zur Regelung eines Klimatisierungssystems insbesondere für ein Kraftfahrzeug, wobei das System der Folgendes umfassenden Gattung ist :
- eine einerseits in das Karosseriegehäuse einmündende und andererseits mit einem Lufteinlass (4) zur Leitung eines Luftstromes zum Karosseriegehäuse des Fahrzeugs hin verbundene Leitung (1);
- ein Wärmetauscher (8) und ein Kältemittel (6), die in der Leitung (1) zwischen einem Ventilator (5) und dem Karosseriegehäuse angeordnet und fähig sind, wenigstens einen Teil des Luftstromes, der zum Karosseriegehäuse hin mit der Hilfe des Ventilators (5) zwangsläufig geführt wird, jeweils zu erwärmen und abzukühlen; und
- eine beweglich in der Leitung (1) zwischen dem Ventilator (5) und dem Tauscher (8) beweglich angeordnete Einstellklappe (10), die mit Hilfe eines Stellgliedes (15) derart bewegt wird, um einen veränderlichen Teil des Luftstromes zum Wärmetauscher hin (8) abzulenken,
wobei die besagte Vorrichtung dadurch gekennzeichnet ist, dass eine Steuerung (7) zum Inbetriebsetzen des Kältemittels (6) mit dem Glied (15) zum Verstellen der Lage der Klappe (10) verbunden ist, so dass eine Bewegung dieses Stellgliedes (15) in einer gegebenen Richtung eine fortschreitende und stetig zunehmende oder abnehmende Anderung der Temperatur der zu dem Karosseriegehäuse hin geleiteten Luft veranlässt.

2. Vorrichtung nach Anspruch 1, dadurch gekennzeichnet, dass der Hub des Stellgliedes (15) in der von der maximalen Temperatur zu der minimalen Temperatur der Luft verlaufenden Richtung aufeinanderfolgend drei derartige Bereiche umfasst, dass :
- in dem ersten Bereich (Z1) die Regelklappe (10) von einer sogenannten "heissen" Stellung, in welcher der Gesamtluftstrom (F) durch den Wärmetauscher (8) hindurch zu einer sogenannten "kalten" Stellung hin, in welcher die Klappe (10) den Durchlass (9) der Luft zum Tauscher (8) hin vollständig verschliesst, fortschreitend bewegt wird;
- in dem zweiten Bereich (Z2) das Stellglied (15) das Inbetriebsetzen des Kältemittels (6) auslösst und dann die Klappe (10) zu einer sogenannten "Zwischenstellung" hin, in welcher der Durchlass (9) zum Tauscher (8) hin teilweise offen ist, fortschreitend bewegt; und
- in dem dritten Bereich (Z3) die Klappe zu ihrer kalten Stellung hin erneut fortschreitend bewegt wird, während das Kältemittel (6) in Betrieb gehalten wird.

3. Vorrichtung nach irgendeinem der Ansprüche 1 und 2, dadurch gekennzeichnet, dass das Stellglied (15) ein Handgriff mit linearer Verschiebung ist.

4. Vorrichtung nach irgendeinem der Ansprüche 1 und 2, dadurch gekennzeichnet, dass das Stellglied (15) ein Drehknopf ist.

5. Vorrichtung nach irgendeinem der Ansprüche 1 bis 4, dadurch gekennzeichnet, dass sie ausserdem umfasst :
- ein durch das Stellglied (15) gedrehtes schwenkbares Ritzel (21); und
- ein durch das Ritzel (21) gedrehtes schwenkbares Element (23), wobei das besagte schwenkbare Element die Regelklappe (10) gemäss einer Schwenkbewegung bewegt, wobei das Ritzel und das schwenkbare Element jeweils gezahnte Teile (32, 33, 34) und Zahnsegmente (30, 31) aufweist, wobei die Teile (32, 33, 34) fähig sind, in kämmenden Eingriff mit den Zahnsegmenten (30, 31) zukommen und derart angeordnet sind, dass ein kontinuierliches Drehen des Ritzels (21) in einer gegebenen Richtung das Schwenkelement (23) abwechselnd in einer Richtung und in der anderen antreibt.

6. Vorrichtung nach Anspruch 5, dadurch gekennzeichnet, dass das Schwenkelement (23) zwei Zahnsegmente (30, 31) aufweist, die koaxial mit einer Drehachse des Elementes angeordnet sind, wobei das erste (30) dieser Segmente an einem inneren Teil (28) des Schwenkelementes und das zweite (31) an einem äusseren Teil (29) gebildet sind, so dass das schwenkbare Ritzel (21), das zwischen diesen beiden Segmenten angeordnet ist, aufeinanderfolgend in kämmenden Eingriff mit dem einen und dem anderen dieser Segmente kommt, wenn es in einer gegebenen Richtung gedreht wird.

7. Vorrichtung nach den Ansprüchen 2 und 6, dadurch gekennzeichnet, dass das besagte Ritzel (21) folgendes umfasst :
- einen ersten gezahnten Abschnitt (32), der in Eingriff mit einem (31) der Zahnsegmente des Schwenkelementes (23) kommt, wenn das Stellglied (15) in dem besagten ersten Bereich (Z1) seines Hubes ist;
- einen zweiten gezahnten Abschnitt (33), der in Eingriff mit dem anderen Zahnsegment (30) kommt, wenn das Stellglied (15) in dem zweiten Bereich (Z2) seines Hubes ist; und
- einen dritten gezahnten Abschnitt (34), der in Eingriff mit demselben Segment (31), wie der erste gezahnte Abschnitt (32) kommt, wenn das Stellglied in dem dritten Bereich (Z3) seines Hubes ist.

8. Vorrichtung gemäss Anspruch 7, dadurch gekennzeichnet, dass der besagte erste und zweite Zahnsegment (30) und (31) des Schwenkelementes (29) in bezug aufeinander entlang der Drehachse dieses Elementes versetzt sind, wobei wenigstens einer der gezahnten Abschnitte des schwenkbaren Ritzels (21) im Bereich des ersten Segmentes (30) angeordnet ist und wenigstens ein anderer gezahnter Abschnitt im Bereich des zweiten Zahnsegmentes (31) des Schwenkelementes angeordnet ist.

9. Vorrichtung nach Anspruch 4 und irgendeinem der Ansprüche 5 bis 8, dadurch gekennzeichnet, dass der vorgenannte Drehknopf (15) mit dem schwenkbaren Ritzel (21) fest verbunden ist, um dieses unmittelbar zu drehen.

10. Vorrichtung nach irgendeinem der Ansprüche 5 bis 9, dadurch gekennzeichnet, dass die vorgenannte Regelklappe (10) mit dem besagten Schwenkelement (23) fest verbunden ist, um unmittelbar durch dieses bewegt zu werden.

## Claims

1. Device for the adjustment of an air conditioning system in particular for an automotive vehicle, the system being of the type comprising :
- a duct (1) opening on the one hand into the passenger space and connected on the other hand to an air intake (4) so as to direct an air flow towards the passenger space of the vehicle ;
- a heat exchanger (8) and a refrigeration means (6) disposed in the duct (1) between a fan (5) and the passenger space and adapted to reheat and to cool, respectively, at least one portion of the air flow which is forced towards the passenger space with the assistance of the fan (5) ; and
- an adjustment damper flap (10) movably mounted within the duct (1) between the fan (5) and the exchanger (8) and displaced with the assistance of an adjustment member (15) so as to deviate a variable portion of the air flow towards the heat exchanger (8),
the said device being characterized in that a control (7) for the start of the refrigeration means (6) is connected to the member (15) for the adjustment of the position of the damper flap (10) so that a displacement in a given direction of this adjustment member (15) results in a gradual and continuously increasing or decreasing variation of the temperature of the air directed towards the passenger space.

2. Device according to claim 1, characterized in that the stroke of the adjustment member (15) in the direction going from the maximum temperature to the minimum temperature of the air successively comprises three zones such that :
- in the first zone (Z1), the adjustment damper flap (10) is gradually displaced from a so-called "hot" position in which the whole of the air flow (F) is deviated through the heat exchanger (8) towards a so-called "cold" position in which the damper flap (10) fully shuts off the passageway (9) of the air towards the exchanger (8) ;
- in the second zone (Z2), the adjustment member (15) releases the start of the refrigeration means (6) and then gradually displaces the damper flap (10) towards a so-called "intermediate" position in which the passageway (9) of the air towards the exchanger (8) is partially opened ; and
- in the third zone (Z3), the damper flap is again gradually displaced towards its cold position whereas the refrigeration means (6) is maintained in operation.

3. Device according to any one of claims 1 and 2, characterized in that the adjustment member (15) is an handle with a linear displacement.

4. Device according to any one of claims 1 and 2, characterized in that the adjustment member (15) is a rotary knob.

5. Device according to any one of claims 1 to 4, characterized in that it further comprises :
- a pivoting toothed gear (21) rotated by the adjustment member (15) ; and
- a pivoting element (23) rotated by the toothed gear (21), the said pivoting element displacing the adjustment damper flap (10) according to a pivoting motion, the toothed gear and the pivoting element exhibiting toothed portions (32, 33, 34) and toothed sectors (30, 31), respectively, the portions (32, 33, 34) being adapted to come into meshing engagement with the toothed sectors (30, 31) and being so arranged that a continuous rotation in a given direction of the gear (21) drives the pivoting element (3) reciprocally in one direction and in the other one.

6. Device according to claim 5, characterized in that the pivoting element (23) comprises two toothed sectors (30, 31) which are disposed coaxially with an axis of rotation of the element, the first one (30) of these sectors being formed on an inner portion (28) of the pivoting element and the second one (31) on an outer portion (29), so that the pivoting gear (21) which is mounted between these two sectors comes successively into meshing engagement with one and the other one of these sectors when it is rotated in a given direction.

7. Device according to claims 2 and 6, characterized in that the said gear (21) exhibits :
- a first toothed portion (32) which comes in engagement with one (31) of the toothed sectors of the pivoting element (23) when the adjustment member (15) is in the said first zone (Z1) of its stroke ;
- a second toothed portion (33) which comes in engagement with the other toothed sector (30) when the adjustment member (15) is in the second zone (Z2) of its stroke ; and
- a third toothed portion( 34) which comes in engagement with the same sector (31) as the first toothed portion (32) when the adjustment member is in the third zone (Z3) of its stroke.

8. Device according to claim 7, characterized in that the said first and second toothed sectors (30) and (31) of the pivoting element (29) are offset with respect to each other along the axis of rotation of this element, at least one of the toothed portions of the pivoting gear (21) being disposed at the level of the first sector (30) and at least another toothed portion being disposed at the level of the second toothed sector (31) of the pivoting element.

9. Device according to claim 4 and to any one of claims 5 to 8, characterized in that the aforesaid rotary knob (15) is made fast to the pivoting gear (21) for directly rotating the latter.

10. Device according to any one of claims 5 to 9, characterized in that the aforesaid adjustment damper flap (10) is made fast to the said pivoting element (23) to be displaced directly by the latter.
